**Europäisches Patentamt**

**European Patent Office**

**Office européen des brevets**

(11) Veröffentlichungsnummer: **0 114 417**
**A2**

(12) # EUROPÄISCHE PATENTANMELDUNG

(21) Anmeldenummer: **83113260.0**

(22) Anmeldetag: **31.12.83**

(51) Int. Cl.³: **F 16 K 27/02**
**F 16 K 1/226**

(30) Priorität: **22.01.83 DE 3302159**

(43) Veröffentlichungstag der Anmeldung:
**01.08.84 Patentblatt 84/31**

(84) Benannte Vertragsstaaten:
**AT DE FR GB IT**

(71) Anmelder: **NEUMO Apparatebau-Metallgiesserei GmbH**
**Bahnhofstrasse 44**
**D-7134 Knittlingen(DE)**

(72) Erfinder: **Nanz, Dieter, Dipl.-Ing.**
**Tailfinger Strasse 10 a**
**D-7000 Stuttgart-Möhringen(DE)**

(72) Erfinder: **Dörsam, Wolfgang**
**Heilbronner Strasse 14**
**D-7518 Bretten(DE)**

(74) Vertreter: **Patentanwälte Ruff und Beier**
**Neckarstrasse 50**
**D-7000 Stuttgart 1(DE)**

(54) Drosselklappenventil.

(57) Ein Drosselklappenventil (11) hat eine Gehäuse, das aus zwei Blechprägeteilen (12, 13) zusammengesetzt ist. Die Welle (23) der Ventilklappe (24) liegt dabei in Ausformungen der Gehäusehälften (12, 13). Die beiden Flansche (14) der Gehäusehälften (12, 13) werden durch eine Spannklammer (30) zusammengehalten, die einen nach innen offenen, U- bzw. V-förmigen Querschnitt hat, aus zwei halbkreisförmigen Teilen gelenkig zusammengefügt und zusammenspannbar ist und mit ihren abgeschrägten Innenflächen auf Wülste (27) an den Flanschen (14) drückt. Das Ventil ist daher durch Lösen nur einer Schraube montierbar und demontierbar.

FIG. 2

EP 0 114 417 A2

Anmelderin:  NEUMO Apparatebau
             Metallgießerei GmbH
             Bahnhofstraße 44
             D-7134 Knittlingen

A 20.824-25

## Drosselklappenventil

Die Erfindung bezieht sich auf ein Drosselklappenventil
nach dem Oberbegriff des Anspruchs 1.

Ein solches Drosselklappenventil ist in der DE-PS 25 36 995
beschrieben. Der Aufbau seines Gehäuses aus Blechprägeteilen, d.h. auf beliebige Weise spanlos geformten
Blechhälften mit nur geringfügiger spanabhebender Nachbearbeitung, ermöglicht eine Material- und Arbeitszeit
sparende Fertigung. Die beiden Gehäusehälften, zwischen
denen in ausgeformten Ausnehmungen die Klappenwelle und
die einerseits die Gehäusehälften gegeneinander und andererseits die Klappenwelle und die Ventilklappe selbst
abdichtende Dichtung geführt bzw. eingespannt sind, haben
nach außen ragende Flansch, die durch mehrere Schraubbolzen zusammengeschraubt werden. Die Anordnung der
Schraubbolzen erfordert einen relativ großen Flanschdurchmesser, damit die Schrauben für die Montage und
Demontage zugänglich sind. Um Verformungen des Flanschgehäuses auszuschließen, müssen zahlreiche Schrauben am Umfang vorgesehen werden, insbesondere, wenn die Dicke des Gehäuses, was im übrigen aus konstruktiven Gründen möglich ist, gering gehalten wird.

Aus dem DE-GM 79 16 836 ist ein Drosselklappenventil bekannt geworden, dessen Gehäuse aus zwei massiven, aus Gußmaterial bestehenden oder spanabhebend geformten Hälften besteht, deren Trennebene durch die Rotationssymmetrieachse der den Strömungskanal bildenden Rohrstutzen verläuft. Die Ringdichtung ist dabei einerseits an Vorsprüngen der Rohrstutzen und andererseits am Gehäuse abgestützt. Das Gehäuse führt auch die Klappenwelle und wird beiderseits durch Schrauben zusammengepreßt. Diese Ventilkonstruktion ist bei Herstellung aus leicht spanabhebend zu bearbeitenden oder zu gießenden Materialien, wie beispielsweise Aluminium, sehr vorteilhaft, hat aber, insbesondere bei Herstellung aus Materialien, wie rostfreiem Stahl, einen sehr hohen Material- und Arbeitszeitaufwand in der Herstellung. Auch muß die Bearbeitung sehr genau erfolgen, weil die beiden Gehäuseteile in ihrer Trennebene auf Anschlag zusammengepreßt werden und dabei direkt und durch die Anpressung der beiden Rohrstutzen über Schrägflächen indirekt die Zusammenpressung der Dichtung bestimmen.

Es ist ferner aus der DE-OS 28 10 683 ein Drosselklappenventil der eingangs erwähnten Art bekannt geworden, an deren Gehäuseflanschen ein die Klappenwelle umgebender Rastflansch für den Betätigungshebel angeformt ist.

Wegen der relativ starken Verformung in diesem Flanschbereich erfordert diese Lösung jedoch recht aufwendige Werkzeuge.

Es ist ferner aus der DE-OS 28 19 921 eine Flanschverbindung bekannt geworden, bei der zwei massive, axial
langgestreckte Ringe mit je zwei Sätzen innerer Schrägflächen,    mit je zwei kegelförmigen Schrägflächen an
zwei gegeneinander gerichteten Rohrstutzen zusammenwirken
und dadurch einen Dichtkörper zwischen sich einspannen.
Die beiden Hälften der Spannteile sind durch Verstiften
miteinander verbunden.

Aufgabe der Erfindung ist es, ein Drosselklappenventil im Sinne einer
verbesserten Gehäusestabilität und leichten Montierbarkeit weiter zu verbessern.

Diese Aufgabe wird durch das Kennzeichen des Anspruchs 1
gelöst.

Durch die Erfindung werden also die zahlreichen Verbindungsbolzen, die die Flansche zusammenhalten, eingespart. Dadurch
ist es möglich, die Gehäuseflansche mit einem wesentlich
geringeren Durchmesser auszuführen, der sogar geringer
sein kann, als der Kreis, auf dem die Befestigungsbolzen
l ägen. Dadurch wird einer Tendenz zum Ausbeulen der
Flanschen unter Innendruck entgegengewirkt. Zusätzlich
versteifen die Ringwulste den Flansch und sorgen außerdem
für eine definierte Kontaktlinie. Es brauchen also keine
aufeinanderabgestimmten Schrägflächen vorhanden zu sein,
und durch die Lage des Ringwulstes kann die Lage des
Andruckpunktes genau bestimmt werden. Außerdem ist die
Spannklammer mit wesentlich geringerem Zeitaufwand anzubringen und zu lösen, da dazu normalerweise nur eine
Schraube nötig ist. Das Auswechseln einer Dichtung ist
also sehr schnell durchzuführen. Die Spannklammer kann aus
zwei im wesentlichen halbkreisförmigen, profilierten

Blechteilen bestehen und kommen so auch mit einem sehr
geringen Materialverbrauch aus. Die Ringwulste können
dabei aus dem Blechmaterial spanlos herausgeformte
ringförmige Sicken sein.

Die Spannklammerteile können vorzugsweise durch ineinandergreifende Vorsprünge scharnierartig miteinander
verbunden sein. Es können also ineinandergreifende
Haken an zwei benachbarten Enden der Spannklammerteile
vorgesehen sein, die ineinandereingehängt werden und
so ohne zusätzliche Teile oder Bolzen ein Scharnier bilden. Die Zusammenspannung der Spannklammer kann durch
eine Spannschraube erfolgen, deren einer Teil gelenkig
an einem der Spannklammerteile angebracht ist. Das Gewinde kann sich also in einem Gelenkbolzen befinden, so
daß die Spannschraube unverlierbar an einem Spannklammerteil angebracht ist. Vorteilhaft kann sie in einen
gabelartigen Schlitz eines Spannklammerteils einführbar
sein. Dadurch kann die Spannschraube außer Eingriff mit
dem Spannklammerteil geschwenkt werden, und es ist nicht
nötig, die Spannschraube zum Öffnen der Spannklammer ganz
herauszudrehen.

Die Spannklammer kann bei einem besonders bevorzugten Ausführungsbeispiel die Betätigungseinrichtung für die Ventilklappenwelle,
beispielsweise den Rastmechanismus eines Betätigungshebels oder
einen pneumatisch, elektrisch oder hydraulisch betätigbaren Motor
tragen und/oder eine Lagesicherung dafür bilden. Dieser kann zusammen mit der Spannklammer montiert und abgenommen werden, was
Reparatur und Reinigung wesentlich erleichtert.

Die Spannklammer kann einen ggf. angeformten, die Klappenwelle umgebenden Bund haben, der einerseits in diesem Bereich die Klappenwelle abdeckt und Träger für die Betätigungseinrichtung und weitere
Funktionsteile sein kann und andererseits die Spannklammer in diesem
Bereich, in dem der Außenring der Spannklammer, d.h. der Boden des
U bzw. V. durchbrochen ist, zusätzlich versteift, während anderenfalls nur die Seitenschenkel tragen würden.

An den Bund kann vorteilhaft ein nach innen gerichteter
Flansch angeformt sein, der einen Abschluß des Bundes
bildet und auch dazu verwendet werden kann, in eine
Nut an der Plattenwelle einzugreifen und diese in axialer
Richtung zu sichern.

An dem Ende des Bundes kann eine Rastscheibe mit Rasten
für einen mit der Klappenwelle drehfest verbundenen Betätigungshebel, z.B. durch Punktschweißung angebracht sein.
Diese meist segmentförmige Rastscheibe mit hochgestelltem
Rand und darin vorgesehenen Rastausnehmungen ist also
nicht am Gehäuse selbst, sondern an der zugehörigen
Spannklammer angebracht und kann mit dieser zusammen entfernt werden.

Bei einer Ausführung, bei der der Betätigungshebel um eine
quer zur Klappenwelle verlaufende Achse unter Federbelastung schwenkbar ist, kann vorzugsweise der Hebel durch
einen die Feder enthaltenden, vorzugsweise aus Kunststoff
bestehenden, an der Klappenwelle angebrachten Federträger
hindurchragen, an dem die Feder und der dadurch belastete
Betätigungshebel in axialer Richtung der Klappenwelle abgestützt sind. Diese Ausführung dient dazu, den Betätigungshebel zum Ausrasten aus der Rastscheibe schwenken zu können.
Durch den Federträger, an dem sich Feder und Betätigungshebel abstützen, wird vermieden, daß die Feder die Klappenwelle in axialer Richtung belastet, wodurch die Belastungsverhältnisse zwischen der scheibenförmigen Ventilklappe
und der Dichtung einseitig verschoben werden könnten. Dabei ist es auch möglich, mit dem Federträger, vorzugsweise durch Einspritzen, ein mehrkantiges Kupplungsteil
zu verbinden, das die Drehbewegung des Betätigungshebels
auf die Klappenwelle überträgt. Der Betätigungshebel, der
aufgrund seiner Schwenkbarkeit nur mit seinen beiden Längsflächen die Drehkraft übertragen kann, bekommt daher eine breitere Übertragungsbasis für die Drehkräfte, während das Kupplungsteil z.B. mit einem Vierkant eine größere Übertragungsfläche hat. Außerdem können die Außenkanten des Betätigungshebels an dem Federträger zur Übertragung von Drehkräften geführt sein. Dies sichert zusätzlich die sichere und verschleißfreie Kraftübertragung.

Weitere Merkmale von bevorzugten Weiterbildungen der Erfindung gehen aus der Beschreibung im Zusammenhang mit den Zeichnungen hervor, wobei die einzelnen Merkmale jeweils für sich allein oder zu mehreren in Form von Unterkombinationen bei einer Ausführungsform der Erfindung verwirklicht sein können. Ein Ausführungsbeispiel der Erfindung ist in der Zeichnung dargestellt und wird im folgenden näher erläutert. Es zeigen:

Fig. 1 einen Schnitt durch ein Drosselklappenventil nach der Linie I in Fig. 2,

Fig. 2 einen Teilschnitt durch das Ventil,

Fig. 3 einen vergrößerten Detailschnitt durch einen Rand des Flansches und eine Spannklammer und

Fig. 4 einen vergrößerten Detailschnitt nach der Linie IV in Fig. 2 und

Fig. 5 einen Schnitt entsprechend Fig. 1 durch ein Ventil mit einer pneumatischen Betätigungseinrichtung.

Das dargestellte Drosselklappenventil 11 besitzt ein aus zwei als identische, jedoch spiegelbildlich gegeneinandergekehrte Blechprägeteile ausgebildete Gehäusehälften 12,13 bestehendes Gehäuse. Jede Gehäusehälfte hat einen radial gerichteten Flansch 14, einen wulstartig ausgeführten Übergangsteil 15
und einen Stutzenteil 16, der ring- bzw. rohrabschnittsförmig ausgebildet ist. Der Übergangsteil 15 ist so geformt, daß dort zwischen beiden Gehäusehälften eine ringförmige Ausnehmung 17 abgegrenzt wird, in der eine Ringdichtung 18 aufgenommen ist. Die Ausnehmung ist hinterschnitten (etwa omegaförmig)ausgeführt, so daß die daran
angepaßte Dichtung gegen Herausrutschen nach innen gesichert ist. Dies wird bei dem dargestellten Ausführungsbeispiel noch durch einen abgesetzten stutzenförmigen
Innenbereich eines Anschlußstutzens 20 auf jeder Seite
unterstützt, mit dem der Stutzenteil 16 der Gehäusehälfte verschweißt ist. Es ist jedoch auch möglich, ohne
diesen inneren Vorsprung 19 des Anschlußstutzens auszukommen. In diesem Falle würde der Stutzenteil 16 direkt
an den rohrförmigen Strömungskanal 21 angrenzen. Bei
dem Anschlußstutzen kann es sich unmittelbar um eine
Rohrleitung oder den Stutzen eines Anschlußflansches
handeln, je nachdem, ob ein direktes Einschweißen des
Ventils in die Rohrleitung erwünscht ist oder die Befestigung durch Anflanschen.

Quer zur Längsachse 22 des Strömungskanals 21 ragt eine an
einer Klappenwelle 23 angebrachte drosselklappenartige
Ventilklappe 24 durch den Strömungskanal. Über sie wird eine
meist als kreisrunde, flachlinsenartige Scheibe ausgebildete Ventilklappe zwischen einer in Achsrichtung 22
stehenden Öffnungsstellung und einer Schließstellung bewegt, in der die Ventilklappe 24 den Strömungskanal 21
verschließt und dabei mit ihrem Außenumfang am Innendurchmesser der Ringdichtung 18 anliegt.

Die runde Klappenwelle 23 ragt durch zwei jeweils etwas
halbkreisförmige Ausprägungen 25 der Gehäusehälften hindurch, die bei zusammengesetzten Gehäusehälften eine kreisrunde Führung für die Klappenwelle ergeben. Sie ragt außerdem durch die Ringdichtung hindurch, so daß diese die dreifache Funktion hat, die Ventilklappe, die beiden Gehäusehälften und die Klappenwelle abzudichten.

Die Flansche 14 haben einen relativ geringen Außendurchmesser und besitzen, vorzugsweise relativ nahe an ihrem Außenumfang, nach außen, d.h. von der Trennebene 26 zwischen den Gehäusehälften 12, 13 hinwegweisende Ringwülste 27, die aus dem Material des Flansches nach außen ausgeprägt sind und mit Ausnahme der Bereiche der Ausprägungen 25 um den Flanschumfang umlaufen.

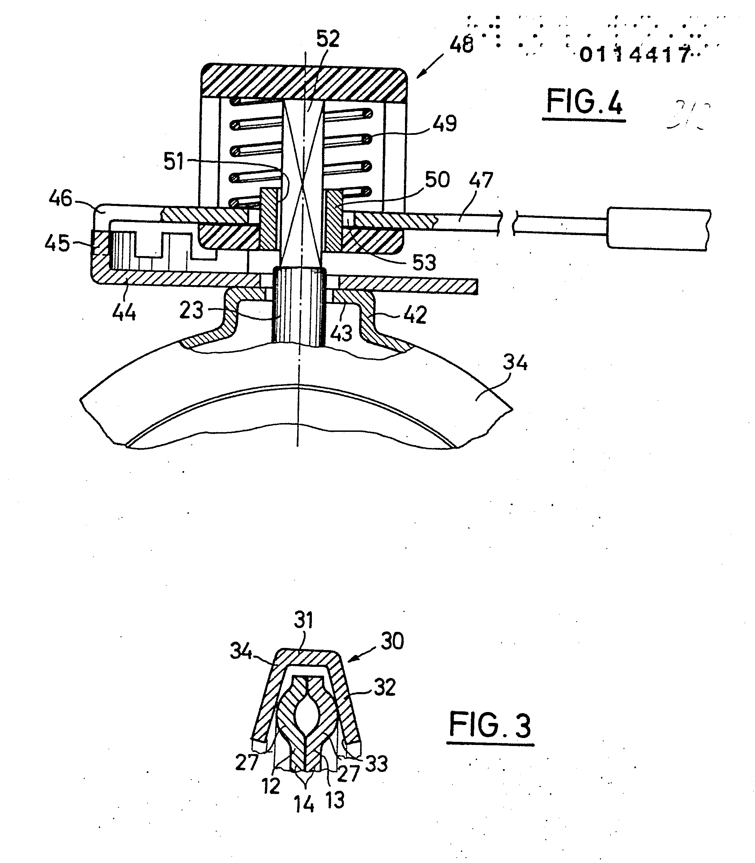

Es ist eine Spannklammer 30 vorgesehen, um die beiden Flansche fest gegeneinander zu pressen. Sie hat den aus Fig. 3 ersichtlichen U- bzw. V-förmigen Querschnitt, der aus einem einen Außenring 31 bildenden Boden und sich nach innen erweiternden Seitenwangen 32 besteht, die an ihrer Innenfläche abgeschrägte Kontaktflächen 33 bilden. Die insgesamt kreisringförmige Spannklammer ist aus zwei Spannklammerteilen 34, 35 zusammengesetzt, die aus Blech mit dem beschriebenen Querschnitt geformt sind und an einem Ende ihrer halbkreisförmigen Erstreckung ineinandergreifende Vorsprünge 36 aufweisen, die hakenartig nach außen abgebogen sind und von denen einer einen Durchbruch und ein anderer eine entsprechende Nase aufweist, so daß sie scharnierartig ineinandergehakt werden können. Die Seitenwangen sind an den Ausprägungen 25 nach außen gewölbt. Jeweils am anderen Ende jedes Spannteils ist dieses, versteift durch die Seitenwangen, ebenfalls nach außen abgebogen. Zwischen den Seitenwangen des Spannteils 34 ist in diesem Bereich ein Bolzen 38 schwenkbar angebracht, der quer zu seiner Schwenkachse eine Gewindebohrung aufweist, in die dieSpannschraube 37 eingeschraubt ist. Der nach außen gerichtete Vorsprung 39 hat einen nach außen offenen Schlitz 40, durch den die Schraube herein- und herausgeschwenkt werden kann, wobei der als Flügelkopf ausgebildete Schraubenkopf sich auf dem Vorsprung 39 abstützt und durch einen hochgebogenen Endabschnitt 55 gesichert ist.

Es ist zu erkennen, daß zum Zusammenspannen der beiden Gehäusehälften 12, 13 lediglich die beiden Spannklammerhälften über den Flanschen 14 in Stellung gebracht zu werden brauchen, danach die unverlierbar an dem Spannklammerteil 34 angebrachte Spannschraube 37 in den Schlitz 40 eingeschwenkt und angezogen zu werden braucht. Die Spannklammer drückt mit ihren abgeschrägten Kontaktflächen 33 auf die Wülste 27 und preßt dadurch die Gehäusehälften entsprechend der Schräge der Kontaktflächen 33 mit großer Kraft gegeneinander. Es hat sich gezeigt, daß diese Spannverbindung einer Schraubverbindung mit mehreren Bolzen mehr als gleichwertig ist, die einen wesentlich größeren Flanschdurchmesser erfordern würde.

Aus Fig. 4 ist insbesondere der Bereich um den Austritt des Antriebsendes der Klappenwelle 23 aus dem Gehäuse zu erkennen.

Aus dem Material der Spannklammer 30 ist in diesem Bereich ein nach außen gerichteter Bund 42 mit nach innen gerichtetem Flansch 43 angeformt, der die Klappenwelle 37 umgibt. Auf dem Flansch 43 ist eine Nockenscheibe 44 in Form eines 90°-Kreissegmentes durch Punktschweißung befestigt, die im Bereich ihrer bogenförmigen Fläche und der daran anschließenden Seiten nach oben gerichtete Seitenteile 45 hat, in denen Rastausnehmungen vorgesehen sind. In sie greift eine Nase 46 am Ende eines Betätigungshebels 47 für das Ventil ein. Der Betätigungshebel ragt durch einen aus Kunststoffspritzguß bestehenden Federträger 48 hindurch, der auf dem oberen Ende der Klappenwelle 23 befestigt ist. Sein hülsenförmiger Körper umschließt eine Druckfeder 49, die sich oben an dem Federträger und unten auf dem Betätigungshebel 47 abstützt, so daß sie den Betätigungshebel in eine untere, horizontale Stellung drückt. In dieser Lage greift die Rastnase 46 in eine Rast der Rastenscheibe. Durch Einspritzen mit dem Federträger verbunden ist ein Kupplungsteil 50, das aus Metall besteht und innen und außen eine Vierkantform hat. Es ist mit seinem Innenvierkant 51 auf einen entsprechenden Vierkant 52 der Klappenwelle gesteckt, so daß der Kupplungsteil und der Federträger drehfest mit der Klappenwelle 23 verbunden sind. Der Betätigungshebel 47 hat einen Schlitz 53, der, um eine Schwenkung des Betätigungshebels zuzulassen, etwas länger ist als der Außenvierkant des Kupplungsteils 50, auf dem sich die seitlichen Begrenzungen des Schlitzes führen. Sie übertragen die Drehkraft des Betätigungshebels auf das Kupplungsteil. Zum Ausrasten der Rastnase 46 wird der Betätigungshebel an seinem Griffende nach unten gedrückt und verschwenkt sich dann entgegen der Kraft der Feder 49, bleibt aber trotzdem in Dreheingriff mit der Klappenwelle. Außerdem können parallel zur Längserstreckung des Betätigungshebels 37 verlaufende Flächen des Federträgers 48 so ausgebildet sein, daß sie die Außenränder des Betätigungshebels zwischen sich führen und somit zur Drehkraftübertragung beitragen.

Ein wesentlicher Vorteil der Erfindung ist es, daß das Gehäuse im Außenbereich, d.h. an den Außenrändern der Flanschen, ganz erheblich versteift wird. Dort sind nicht nur die Wülste 27 vorhanden, sondern das Blech liegt auch zusammen mit den Seitenwangen 32 vierfach, und der Außenring 31 der Spannklammer wirkt wie ein Versteifungsflansch. Von besonderem Vorteil ist es auch, daß die
Spannklammerteile 34, 35 im Bereich der Spannschraube
im angezogenen Zustand nicht ganz aufeinanderliegen und so
mit geringem Kraftaufwand beliebig nachspannbar sind.

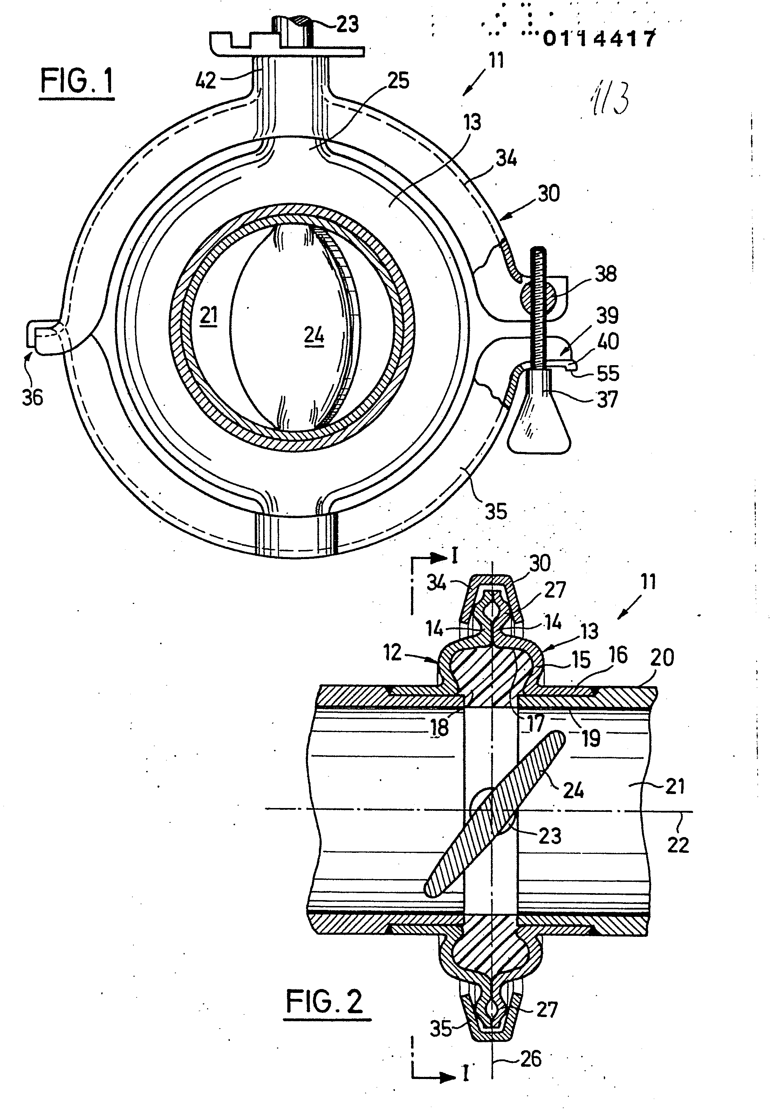

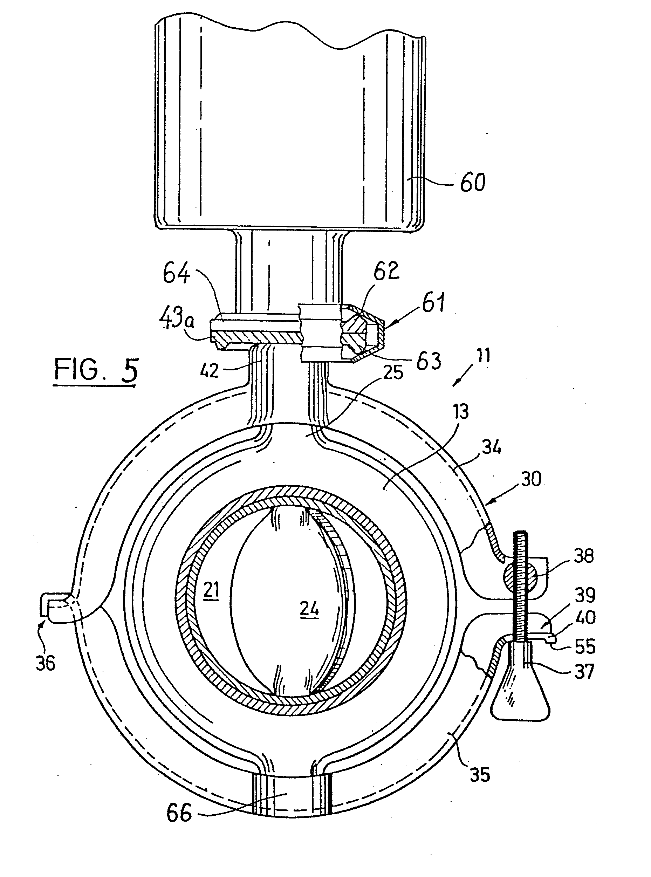

Während in Fig. 1 bis 4 eine manuell betätigbare Ausführung gezeigt wurde, bei der an dem Bund 42 eine Festlegungseinrichtung für den Betätigungshebel 47, nämlich Feststellrasten, angeordnet waren, ist in Fig. 5 eine pneumatisch betätigte Ausführung dargestellt. Sie enthält
eine pneumatische Betätigungseinrichtung 60, d.h. einen
an sich bekannten Pneumatikzylinder, in dem bei Beaufschlagung durch Druckluft ein Kolben axial verschoben und
über eine Wendelführung die Abtriebswelle gedreht wird,
die die Ventilwelle dreht (vgl. US-PS 3 602 478 und 4
325 535, auf die Bezug genommen wird).

Bei im übrigen mit Fig. 1 identischer Ausführung ist auf
die obere Stirnseite des Bundes eine ringförmige Scheibe
geschweißt, die einen überstehenden Flansch 43 a bildet.
Er hat an seiner zum Ventil 11 gekehrten Fläche einen im
Randbereich umlaufenden Wulst 63. An der Betätigungseinrichtung 60 ist spiegelbildlich dazu ein Flansch 64 mit
Wulst 62 vorgesehen. Sie werden durch eine Spannklammer 61
zusammengespannt, die der Spannklammer 30 bis auf ihre
geringe Größe und den fehlenden Bund 42 sowie die diesem
gegenüberliegende Ausbandung 66 für die untere Wellenführung gleichen kann. So kann je nach Wunsch entweder die gesamte Einheit Spannklammer 30 / Betätigungseinrichtung 60
oder die letztere allein jeweils nur durch Betätigung einer
Schraube ohne Werkzeug abgenommen und wieder montiert werden. Bei häufig zu reinigenden und zu überprüfenden Ventilen ist dies ein besonderer Vorteil. Ebenso wie die Flanschen 43 a, 64 können auch die Flanschen 12, 13 aus massiverem Material, z.B. durch Drehbearbeitung, hergestellt sein und die Wülste 27 könnten ebenfalls spanabhebend hergestellt sein, obwohl die Herstellung insbesondere der relativ großen Gehäusehälften aus Blechprägeteilen erhebliche Material- und Arbeitseinsparungen ermöglicht. Der Flansch 43 a könnte auch als nach außen umgebogenes, mit dem Spannklammerteil 34 einstückiges Ende des Bundes 42 ausgeführt sein.

Anmelderin: NEUMO Apparatebau
Metallgießerei GmbH
Bahnhofstraße 44

D-7134 Knittlingen

A 20 824-25

A n s p r ü c h e

Drosselklappenventil
_____

1. Drosselklappenventil mit einem Gehäuse, das aus zwei
   in einer quer zur Strömungsrichtung verlaufenden Trennebene (26) über nach außen vorstehende Flansche (14)
   zusammengepreßten Flanschteilen (12, 13) besteht, in
   denen im Bereich der Trennebene (26) Ausnehmungen (17)
   für eine den Strömungskanal (21) umgebende Dichtung (18)
   und die Welle (23) der scheibenförmigen Ventilklappe (24)
   angeformt sind, gekennzeichnet durch eine geteilte, in
   Umfangsrichtung zusammenspannbare Spannklammer (30)
   mit im wesentlichen U- oder V-förmigem Querschnitt und
   abgeschrägten Innenflächen (33), die die Flansche (14)
   umgibt und übergreift, und durch je einen in Umfangsrichtung verlaufenden, in axialer Richtung vorstehenden,
   von der Trennebene (26) hinwegweisenden, nahe dem Außenumfang der Flansche (14) an diesen vorgesehenen Wulst
   (27), mit dem die Innenflächen (33) der Spannklammer (30)
   zusammenwirken.

A 20 824-25          - 2 -

2. Drosselklappenventil nach Anspruch 1, dadurch gekennzeichnet, daß die Flanschteile (12, 13) verformte Blechteile sind und die Wülste (27) aus dem Blechmaterial
   spanlos herausgeformte ringförmig angeordnete Sicken
   sind.

3. Drosselklappenventil nach Anspruch 1 oder 2, dadurch
   gekennzeichnet, daß die Spannklammer (30) aus zwei im
   wesentlichen halbkreisförmigen, profilierten, verformten
   Blechteilen (34, 35) besteht.

4. Drosselklappenventil nach einem der vorhergehenden Ansprüche, dadurch gekennzeichnet, daß die Spannklammerteile (34, 35) vorzugsweise durch ineinandergreifende
   Vorsprünge (36) scharnierartig miteinander verbunden
   sind.

5. Drosselklappenventil nach einem der vorhergehenden Ansprüche, dadurch gekennzeichnet, daß die Zusammenspannung der Spannklammer (30) durch eine Spannschraube (37) erfolgt, deren einer Teil (38) gelenkig an einem der Spannklammerteile (34) angebracht ist, wobei
   vorzugsweise die Spannschraube (37) in einen Schlitz
   (40) eines Spannklammerteiles (35) einführbar ist.

6. Drosselklappenventil nach einem der vorhergehenden Ansprüche, dadurch gekennzeichnet, daß an der Spannklammer
   (30) Mittel zur Festlegung einer Betätigungseinrichtung
   (47; 60) für die Welle (23) der Ventilklappe (24) vorgesehen sind.

7. Drosselklappenventil nach einem der vorhergehenden Ansprüche, dadurch gekennzeichnet, daß die Festlegungs-

A 20 824-25                    - 3 -

mittel einen an der Spannklammer (30) ggf. angeformten,
die Klappenwelle (23) umgebenden Bund (42) enthalten,
an dem vorzugsweise ein nach innen gerichteter Flansch
(43) angeformt ist.

8. Drosselklappenventil nach Anspruch 7, dadurch gekennzeichnet, daß als Festlegungsmittel an dem Ende des Bundes (42) eine Rastscheibe (44) mit Rasten für einen mit
der Klappenwelle (23) drehfest verbundenen Betätigungshebel (47) der manuellen Betätigungseinrichtung angebracht
ist.

9. Drosselklappenventil nach Anspruch 8, dadurch gekennzeichnet, daß der Betätigungshebel (47) um eine quer zur
Klappenwelle (23) verlaufende Achse unter Federbelastung
schwenkbar ist, dadurch gekennzeichnet, daß der Hebel
(47) durch einen die Feder (49) enthaltenden, vorzugsweise aus Kunststoff bestehenden, an der Klappenwelle (23)
angebrachten Federträger (48) hindurchragt, an dem die
Feder (49) und der Betätigungshebel (47) in axialer Richtung der Klappenwelle (23) abgestützt sind, wobei insbesondere mit dem Federträger (48), vorzugsweise durch
Einspritzen, ein mehrkantiger Kupplungsteil (50) verbunden ist, der die Drehbewegung des Betätigungshebels
(47) auf die Klappenwelle (23) überträgt und wobei
vorteilhaft die Außenkante des Betätigungshebels (47)
an dem Federträger (48) zur Übertragung von Drehkräften
geführt sind.

10. Drosselklappenventil nach einem der vorhergehenden Ansprüche, dadurch gekennzeichnet, daß die Betätigungseinrichtung einen pneumatisch, elektrisch oder hydraulisch betätigbaren Motor (60) zum Schwenken der Welle
    enthält.

11. Drosselklappenventil nach einem der Ansprüche 7 bis 10,
    dadurch gekennzeichnet, daß an dem Bund ein Befestigungsflansch (43 a) für die Betätigungseinrichtung (60) angeordnet ist, der vorzugsweise über eine Spannklammer (61)
    mit einem Flansch (64) der Betätigungseinrichtung (60)
    verbindbar ist.

FIG.1

FIG.2

0114417

FIG.4

FIG.3

0114417

FIG. 5